# EUROPEAN PATENT APPLICATION

(11) **EP 4 797 391 A1**
(43) Date of publication of application: **26.08.2026**
(21) Application number: 26154624.6
(22) Date of filing: 28.01.2026
(51) Int. Cl.: H01M 10/658, H01M 50/211, H01M 50/249, H01M 50/262, H01M 50/358

(54) **BATTERY DEVICE**

(30) Priority: 25.02.2025 JP 2025027805
(71) Applicant: Toyota Jidosha Kabushiki Kaisha, Toyota-shi, Aichi-ken 471-8571 (JP)
(72) Inventor: MATSUO, Kensuke, Toyota-shi, Aichi-ken, 471-8571 (JP); KAWASAKI, Hironori, Toyota-shi, Aichi-ken, 471-8571 (JP)
(74) Representative: TBK

(57) **Abstract**

A battery device (20) has: a battery module (60) having plural battery cells (48) that are lined-up in a predetermined direction, and a module case (42) that houses the plural battery cells; a heat-resistant insulating member (65) attached to the battery module so as to cover first smoke vent holes (46) formed in the module case, and including a connecting portion (74) having an insertion groove (79); and a fixing member (85) detachably fit in the insertion groove and supported by a fixed body (24).

## Description

### BACKGROUND

### Technical Field

The present disclosure relates to a battery device.

### Related Art

Japanese National Phase Publication (JP-A) No. 2021-527914 discloses a battery device in which a heat-resistant layer, which faces first smoke vent holes (emergency degassing openings) of battery cells, is provided at the inner surface of a housing (battery case) that houses a battery module having plural battery cells.

Heat-resistant insulating members that are heat-resistant and electrically insulating can be attached to battery cells. For example, heat-resistant insulating members can be attached to battery cells by using double-sided tape. In this case, high-temperature debris, which is discharged from the first smoke vent hole of another battery cell, contacting a battery cell is suppressed by the heat-resistant insulating member.

However, if the heat-resistant insulating member contacts high-temperature debris, there is the concern that the chemical adhesive force that is due to the double-sided tape will decrease due to the heat of the debris, and that the heat-resistant insulating member will peel off of the battery cell.

In view of the above-described circumstances, an object of the present disclosure is to provide a battery device in which a heat-resistant insulating member can be attached to a battery module simply and securely, and it is difficult for the heat-resistant insulating member to fall off of the battery module even if the battery device is exposed to high temperatures.

### SUMMARY

A battery device of a first aspect has: a battery module having plural battery cells that are lined-up in a predetermined direction, and a module case that houses the plural battery cells; a heat-resistant insulating member attached to the battery module so as to cover first smoke vent holes formed in the module case, and including a connecting portion having an insertion groove; and a fixing member detachably fit in the insertion groove and supported by a fixed body.

In the battery device of the first aspect, the fixing member that is supported by the fixed body is detachably fit in the insertion groove of the connecting portion of the heat-resistant insulating member that is attached to the battery module so as to cover the first smoke vent holes. Therefore, the heat-resistant insulating member can be attached to the battery module easy and securely. Moreover, because the insertion groove of the connecting portion of the heat-resistant insulating member is mechanically joined to the fixing member that is supported by the fixed body, it is difficult for the heat-resistant insulating member to fall off of the battery module even if the battery device is exposed to high temperatures.

In a battery device of a second aspect, in the first aspect, given that a direction along a predetermined straight line is defined as a first direction, an end portion at one side in the first direction of the insertion groove is open.

The insertion groove of the connecting portion of the battery device of the second aspect can, by using the fixing member, mechanically join the heat-resistant insulating member and the fixed body that faces the connecting portion in the first direction.

In a battery device of a third aspect, in the second aspect, given that a direction orthogonal to the first direction is defined as a second direction, both end portions in the second direction of the insertion groove are open.

In the battery device of the third aspect, the fixing member can be inserted in the insertion hole and the fixing member can be removed from the insertion hole, due to the fixing member being moved in the second direction relative to the connecting portion.

In a battery device of a fourth aspect, in the second aspect or the third aspect, given that a direction orthogonal to the first direction and the second direction is defined as a third direction, the connecting portion has a first plate-shaped portion, and a second plate-shaped portion facing the first plate-shaped portion in the third direction so as to form the insertion groove between the first plate-shaped portion and the second plate-shaped portion.

In accordance with the battery device of the fourth aspect, the connecting portion that has the insertion groove can be realized by a simple structure.

In a battery device of a fifth aspect, in the fourth aspect, the first plate-shaped portion and the second plate-shaped portion are elastically deformable in the third direction, and a dimension in the third direction of a gap between the first plate-shaped portion and the second plate-shaped portion when the first plate-shaped portion and the second plate-shaped portion are in free states is smaller than a dimension in the third direction of the fixing member.

In accordance with the battery device of the fifth aspect, the fixing member and the connecting portion can be mechanically joined simply and reliably.

In a battery device of a sixth aspect, in the third aspect, the heat-resistant insulating member has a base portion facing the first smoke vent holes from above, and a pair of flanges apart from one another in the second direction that is orthogonal to a vertical direction and to the first direction, an upper portion of the module case is positioned between the pair of flanges, and the pair of flanges contact the upper portion of the module case.

In accordance with the battery device of the sixth aspect, the heat-resistant insulating member can be prevented from moving in the second direction relative to the module case.

In a battery device of a seventh aspect, in the sixth aspect, the connecting portion is provided at one end portion in the first direction of the base portion, and a fixing bracket is fixed to another end portion in the first direction of the base portion and to a bottom plate portion of a battery case that houses the battery module, the heat-resistant insulating member and the fixing member.

In accordance with the battery device of the seventh aspect, the state in which the heat-resistant insulating member is attached to the battery module can be made to be secure.

In a battery device of an eighth aspect, in any of the first through third aspects, the connecting portion is formed of mica.

In the battery device of the eighth aspect, because the connecting portion is formed of mica, it is easy to manufacture, at a low cost, the connecting portion that is heat-resistant.

In a battery device of a ninth aspect, in any of the first through eighth aspects, second smoke vent holes that face the first smoke vent holes are formed in the heat-resistant insulating member.

In the battery device of the ninth aspect, debris, which has been discharged from a battery cell and is discharged via the first smoke vent holes to the outer side of the battery module, can be discharged to the outer side of the heat-resistant insulating member via the second smoke vent holes.

In a battery device of a tenth aspect, in any of the first through ninth aspects, the fixing member is formed of metal.

In the battery device of the tenth aspect, the fixing member that is made of metal is covered by a portion of the connecting portion. Therefore, the temperature of the fixing member increasing due to the heat of high-temperature debris that has been discharged from a battery cell can be suppressed by a portion of the connecting portion.

In a battery device of an eleventh aspect, the battery device of any of the first through tenth aspects has a plurality of battery modules, wherein the connecting portion of the heat-resistant insulating member that is attached to at least one of the battery modules is the fixed body.

In the battery device of the eleventh aspect, the heat-resistant insulating member can be attached simply and securely to each of two battery modules that are adjacent to one another.

In a battery device of a twelfth aspect, in any of the first through eleventh aspects, the fixing member is fixed to the battery module to which the heat-resistant insulating member having the connecting portion that is the fixed body is attached.

In accordance with the battery device of the twelfth aspect, the heat-resistant insulating member can be attached more simply to each of two battery modules that are adjacent to one another.

In a battery device of a thirteenth aspect, in any of the first through twelfth aspects, a battery case, which houses the battery module, the heat-resistant insulating member and the fixing member, is the fixed body.

In the battery device of the thirteenth aspect, the battery case and the heat-resistant insulating member can be mechanically joined by using the fixing member that is supported by the battery case.

As described above, the battery device relating to the present disclosure has the excellent effects that a heat-resistant insulating member can be attached to a battery module simply and securely, and it is difficult for the heat-resistant insulating member to fall off of the battery module even if the battery device is exposed to high temperatures.

### BRIEF DESCRIPTION OF THE DRAWINGS

Exemplary embodiments of the present disclosure will be described in detail based on the following figures, wherein:
Fig. 1 is a cross-sectional view cut at the vehicle transverse direction center of a vehicle in which a battery pack relating to an embodiment is installed;
Fig. 2 is a schematic, exploded perspective view of the battery pack;
Fig. 3 is a schematic perspective view of a separated state of a battery module and a heat-resistant insulating member;
Fig. 4 is a schematic, exploded perspective view of the battery module;
Fig. 5 is a schematic, exploded perspective view of the heat-resistant insulating member;
Fig. 6 is a schematic sectional view of connecting portions of two, adjacent battery modules; and
Fig. 7 is a schematic sectional view of a heat-resistant insulating member, a rear plate portion of a lower case, and a fixing member of a modified example.

### DETAILED DESCRIPTION

A battery pack relating to an embodiment is described hereinafter with reference to the appended drawings. Note that arrow UP, arrow FR and arrow LH in the respective drawings indicate the upper side in the vehicle vertical direction (a third direction), the front side in the vehicle longitudinal direction (a first direction), and the left side in the vehicle left-right direction (a predetermined direction) (a second direction).

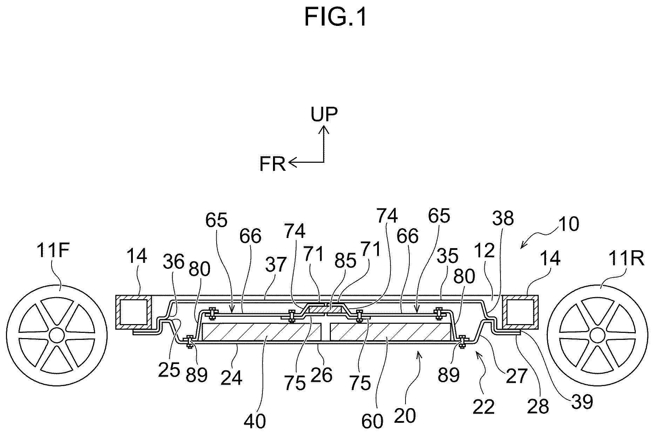

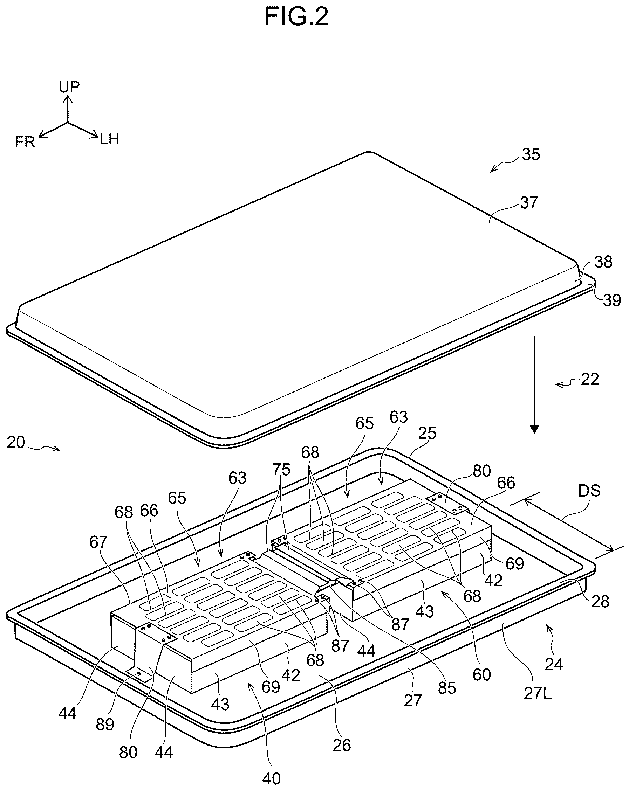

As illustrated in Fig. 1 and Fig. 2, a battery pack (battery device) 20 of the present embodiment is installed in a vehicle (electric vehicle) 10. The vehicle 10 of the present embodiment is a battery electric vehicle (BEV).

The vehicle 10 has a pair of left and right front wheels 11F, a pair of left and right rear wheels 11R, a pair of left and right rockers 12 that are some vehicle body frame members and extend in the vehicle longitudinal direction, and a pair of front and rear cross members 14 that are some vehicle body frame members that extend in the vehicle transverse direction (the left-right direction) and whose both end portions are fixed to the left and right rockers 12.

The battery pack 20 of the present embodiment has a battery case 22, a battery module 40, and a battery module 60. The electric power of the battery pack 20 (battery cells 43) is, for example, supplied to an electric motor (not illustrated) that imparts driving force to the front wheels 11F and the rear wheels 11R.

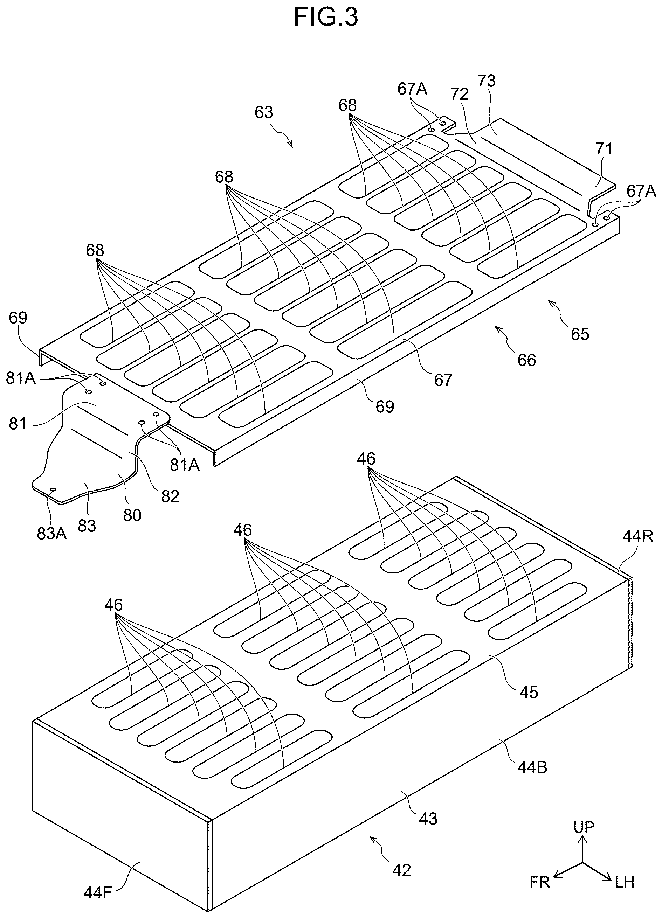

As illustrated in Fig. 2 and Fig. 3, the battery case 22 has a lower case 24 and an upper case 35.

The lower case 24 is a hollow body at which an opening portion 25 is formed at the upper surface thereof. The lower case 24 has a bottom plate portion 26, a peripheral wall portion 27 and an outer peripheral flange 28. The planar shape of the peripheral wall portion 27 is annular, and the lower end portion of the peripheral wall portion 27 is connected to the outer peripheral edge portion of the bottom plate portion 26. The planar shape of the outer peripheral flange 28 is annular, and the inner peripheral edge portion of the outer peripheral flange 28 is connected to the upper end portion of the peripheral wall portion 27.

The upper case 35 is a hollow body at which an opening portion 36 is formed at the lower surface thereof. The upper case 35 has a ceiling plate portion 37, a peripheral wall portion 38 and an outer peripheral flange 39. The planar shape of the peripheral wall portion 38 is annular, and the upper end portion of the peripheral wall portion 38 is connected to the outer peripheral edge portion of the ceiling plate portion 37. The planar shape of the outer peripheral flange 39 is annular, and the inner peripheral edge portion of the outer peripheral flange 39 is connected to the lower end portion of the peripheral wall portion 38.

As illustrated in Fig. 2, the battery module 40 and the battery module 60 are provided at the interior of the lower case 24. The battery module 40 and the battery module 60 are lined-up in the longitudinal direction. In further detail, the battery module 60 is positioned further toward the rear than the battery module 40. The battery module 40 and the battery module 60 are electrically connected to one another.

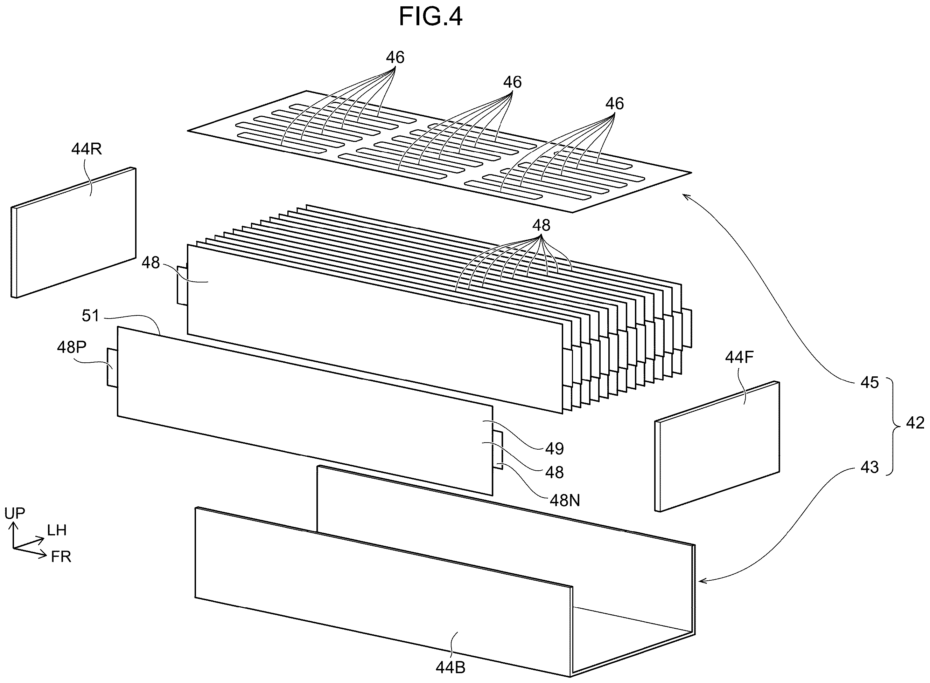

As illustrated in Fig. 1 and Fig. 2, the battery module 40 is a member that is substantially rectangular parallelopiped and whose length direction is the vehicle longitudinal direction. As illustrated in Fig. 3 and Fig. 4, a module case 42 that structures the outer shape of the battery module 40 is formed of an aluminum alloy. The module case 42 has a case main body 43 and a lid 45.

The case main body 43 has main body portion 44B that is U-shaped in cross-section and whose upper surface and front and rear both surfaces are open, a front plate portion 44F and a rear plate portion 44R. The front plate portion 44F is fixed to the front end surface of the main body portion 44B, and the rear plate portion 44R is fixed to the rear end surface of the main body portion 44B.

Each of laminate-type battery cells 48 has a positive electrode sheet, a negative electrode sheet, a separator and a laminate film 49. As illustrated in Fig. 4, the laminate film 49 has a left-side structural portion and a right-side structural portion, and is a bag-shaped member due to the outer peripheral edge portions of the left-side structural portion and the right-side structural portion being adhered together. This bag-shaped member covers the layered body that has the positive electrode sheet, the negative electrode sheet and the separator. A portion of a positive electrode terminal 48P and a portion of a negative electrode terminal 48N (see Fig. 4) of the layered body are positioned at the outer side of the laminate film 49. The positive electrode terminals 48P and the negative electrode terminals 48N of the respective battery cells 48 are joined by laser welding to unillustrated bus bars.

A smoke ventable portion 51, which is structured by the upper edge portion of the left-side structural portion and the upper edge portion of the right-side structural portion of the laminate film 49 being welded, is formed at the upper edge portion of the battery cell 48 that has such a structure. The smoke ventable portion 51 is closed at usual times. Namely, at usual times, the bag-shaped member that is structured by the laminate film 49 seals the positive electrode sheet, the negative electrode sheet, the separator, and electrolyte liquid. However, when, for example, the internal pressure of the battery cell 48 reaches a predetermined value due to an internal short circuit arising at the battery cell 48, the smoke ventable portion 51 opens, and gas and the like that are within the battery cell 48 are discharged from the smoke ventable portion 51 to the outer side of the battery cell 48.

The plural battery cells 48 that are lined-up in the left-right direction are housed in the interior space of the case main body 43. As illustrated in Fig. 3, the lid 45 is placed on the upper surface of the case main body 43 that houses the plural battery cells 48 and bus bars and the like therein, and the outer peripheral edge portion of the lid 45 is fixed to the upper end portion of the case main body 43. As illustrated in Fig. 3 and Fig. 4, plural first smoke vent holes 46 formed from long holes are formed in the lid 45.

Although detailed drawings and description thereof are omitted, the battery module 60 has the same structure as the battery module 40. As illustrated in Fig. 2, the battery module 40 and the battery module 60 are placed on the bottom plate portion 26 of the lower case 24. Moreover, the battery modules 40 and 60 are fixed to the bottom plate portion 26 by fixing means. The fixing means is, for example, bolts that are passed through through-holes provided in fixed portions (not illustrated), which project out at the outer surface of the case main body 43, and that are screwed-together with female screw holes (not illustrated) provided in the bottom plate portion 26.

The battery pack 20 has a cover unit 63 that is attached to the lower case 24, the battery module 40 and the battery module 60. The cover unit 63 has a heat-resistant insulating member (fixed body) 65 and a fixing bracket 80.

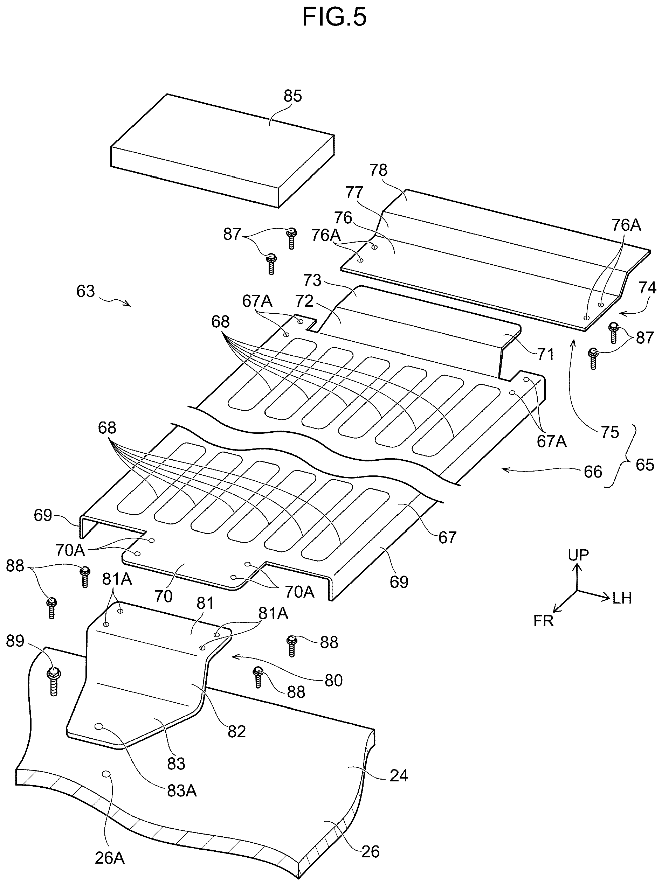

As illustrated in Fig. 5, the heat-resistant insulating member 65 has a main body member 66 and an auxiliary member (second plate-shaped portion) 75. The main body member 66 and the auxiliary member 75 are both plate-shaped members made of mica. As is well known, mica has excellent electrical insulating ability and heat resistance. Further, the thermal conductivity of mica is low.

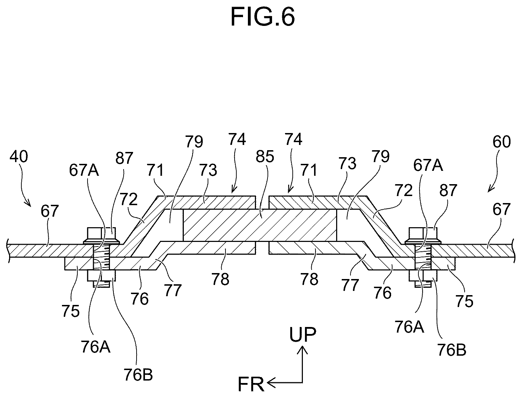

The main body member 66 has a base portion 67 whose planar shape is substantially rectangular, a pair of flanges 69 projecting out downward from both side edge portions of the base portion 67, a fixing projection 70 projecting out forward from the front edge portion of the base portion 67, and a connecting plate-shaped portion (first plate-shaped portion) 71 projecting out rearward from the rear edge portion of the base portion 67. The planar shape of the base portion 67 is substantially the same as the case main body 43 and the lid 45. Moreover, plural second smoke vent holes 68 are formed in the base portion 67. As illustrated in Fig. 5 and Fig. 6, the connecting plate-shaped portion 71 has an inclined portion 72 extending upward at an incline from the base portion 67, and a first nipping portion 73 extending rearward from the rear end of the inclined portion 72. The left-right dimension of the connecting plate-shaped portion 71 is smaller than that of the base portion 67. The connecting plate-shaped portion 71 is elastically deformable in the vertical direction that is the plate thickness direction thereof.

The auxiliary member 75 has a fixed portion 76, an inclined portion 77 extending upward at an incline from the rear edge portion of the fixed portion 76, and a second nipping portion 78 extending rearward from the rear end of the inclined portion 77. The left-right dimension of the auxiliary member 75 is larger than that of the connecting plate-shaped portion 71 and is substantially the same as the left-right dimension of the base portion 67. The auxiliary member 75 is elastically deformable in the vertical direction that is the plate thickness direction thereof.

As illustrated in Fig. 6, the fixed portion 76 of the auxiliary member 75 is made to contact the lower surface of the rear end portion of the base portion 67. Plural bolts 87 are inserted from above into plural through-holes 67A, which are formed in the rear end portion of the base portion 67, and plural through-holes 76A that are formed in the fixed portion 76. The lower portions of the bolts 87 are respectively screwed-together with weld nuts 76B (see Fig. 6) that are fixed to the lower surface of the fixed portion 76. Namely, the fixed portion 76 is fixed to the lower surface of the rear end portion of the base portion 67 by using the plural bolts 87 and weld nuts 76B. When the fixed portion 76 is fixed to the base portion 67 in this way, a gap is formed between the inclined portion 72 and the inclined portion 77, and an insertion groove 79 that is a gap is formed between the first nipping portion 73 and the second nipping portion 78. Here, the distance in the vertical direction between the lower surface of the first nipping portion 73 and the upper surface of the second nipping portion 78 at the time when the connecting plate-shaped portion 71 and the auxiliary member 75 are in free states is defined as H1. Namely, the vertical dimension of the insertion groove 79 when the connecting plate-shaped portion 71 and the auxiliary member 75 are in free states is H1.

As illustrated in Fig. 5, the fixing bracket 80 that is a plate-shaped member made of metal has a first fixed portion 81, an inclined portion 82 extending downward at an incline from the front end portion of the first fixed portion 81, and a second fixed portion 83 extending forward from the front end of the inclined portion 82. Plural through-holes 81A are formed in the first fixed portion 81, and one through-hole 83A is formed in the second fixed portion 83.

As illustrated in Fig. 3, the first fixed portion 81 of the fixing bracket 80 is placed on the upper surface of the fixing projection 70 of the main body member 66. Plural bolts 88 are inserted from above into the respective through-holes 81A of the first fixed portion 81 and plural though-holes 70A formed in the fixing projection 70. The lower portions of the bolts 88 are respectively screwed together with weld nuts (not illustrated) that are fixed to the lower surface of the fixing projection 70. Namely, the first fixed portion 81 is fixed to the upper surface of the fixing projection 70 by using the plural bolts 88 and weld nuts.

The two main body members 66 that have been made integral with the auxiliary members 75 and the fixing brackets 80 in this way are attached to the upper portions of the battery module 40 and the battery module 60 respectively. Namely, as illustrated in Fig. 2, the respective base portions 67 are placed on the upper surfaces of the corresponding module cases 42 (lids 45), and the left and right flanges 69 contact the upper edge portions of the both side surfaces of the module cases 42. Note that "contact" here means that the left and right flanges 69 simultaneously contact the both side surfaces of the module case 42, or, when one of the flanges 69 contacts one of the side surfaces of the module case 42, the other flange 69 faces the another side surface of the module case 42 while forming a slight gap therebetween. Note that, as illustrated in Fig. 2, the fixing bracket 80 is connected to the front portion of the base portion 67 attached to the battery module 40, and the fixing bracket 80 is connected to the rear portion of the base portion 67 attached to the battery module 60. Moreover, the auxiliary member 75, which is connected to the rear portion of the base portion 67 attached to the battery module 40, and the auxiliary member 75, which is connected to the front portion of the base portion 67 attached to the battery module 60, face one another in the longitudinal direction. Further, the second fixed portion 83 of the fixing bracket 80 connected to the base portion 67 attached to the battery module 40, and the second fixed portion 83 of the fixing bracket 80 connected to the base portion 67 attached to the battery module 60, contact the upper surface of the bottom plate portion 26 of the lower case 24. Moreover, bolts 89, which pass through the through-holes 83A formed in the second fixed portions 83 of the respective fixing brackets 80, are screwed together respectively with female screw holes 26A (see Fig. 5; the female screw hole for fixing the battery module 60 is not illustrated) that are formed in the bottom plate portion 26. Namely, the respective fixing brackets 80 are fixed to the bottom plate portion 26 by using the bolts 89.

Moreover, as illustrated in Fig. 2 and Fig. 6, a fixing member 85 that is a flat plate made of metal is inserted into the insertion groove 79, which is formed between the first nipping portion 73 and the second nipping portion 78 at the battery module 40 side, and the insertion groove 79, which is formed between the first nipping portion 73 and the second nipping portion 78 at the battery module 60 side. The plate thickness (vertical dimension) of the fixing member 85 is H2. Further, the plate thickness H2 of the fixing member 85 > the vertical dimension H1 of the insertion groove 79 of the time when the connecting plate-shaped portion 71 and the auxiliary member 75 are in free states.

For example, the fixing member 85 is inserted into the insertion groove 79 at the battery module 40 side and the insertion groove 79 at the battery module 60 side from the left-side opening portion of the insertion groove 79 at the battery module 40 side and the left-side opening portion of the insertion groove 79 at the battery module 60 side. As described above, the plate thickness H2 of the fixing member 85 is greater than the vertical dimension H1 of the insertion grooves 79 of the time when the connecting plate-shaped portions 71 and the auxiliary members 75 are in free states. Therefore, the connecting plate-shaped portions 71 and the auxiliary members 75 are elastically deformed by the fixing member 85, and the the first nipping portions 73 of the connecting plate-shaped portions 71 and the second nipping portions 78 of the auxiliary members 75 press-contact the upper and lower both surfaces of the fixing member 85 respectively. Namely, the fixing member 85 is fit together with connecting portions 74 that include the connecting plate-shaped portions 71 that have the first nipping portions 73 and the auxiliary members 75 that have the second nipping portions 78.

When the heat-resistant insulating members 65 are attached to the battery modules 40, 60 in this way, the first smoke vent holes 46 of the respective lids 45 and the second smoke vent holes 68 of the respective main body members 66 face one another in the vertical direction.

A sealing member (not illustrated) is provided at the entirety of the upper surface of the outer peripheral flange 28 of the lower case 24 that houses the battery module 40 and the battery module 60, and the outer peripheral flange 39 of the upper case 35 is placed on the upper surface of the outer peripheral flange 28 and the sealing member. Moreover, plural places of the outer peripheral flange 28 and the outer peripheral flange 39 are fixed together by plural fixing members. The battery pack 20 is thereby completed.

The battery case 22 of the battery pack 20 that has this structure is supported by the rockers 12 and the cross members 14. Namely, as illustrated in Fig. 1 and Fig. 2, in the state in which the ceiling plate portion 37 and the peripheral wall portion 38 of the upper case 35 are positioned in the space surrounded by the rockers 12 and the cross members 14, the outer peripheral flange 39 is made to contact, from below, the lower surfaces of the respective rockers 12 and the respective cross members 14. Moreover, the lower surfaces of the rockers 12 and plural places of the outer peripheral flange 28 and the outer peripheral flange 39 are fixed together by plural fixing members.

### (Operation and Effects)

Operation and effects of the embodiment are described next.

For example, when an internal short circuit arises at any of the battery cells 48 of either one of the battery module 40 and the battery module 60, the internal pressure of that battery cell 48 rises. When the internal pressure of the battery cell 48 reaches a predetermined value, the smoke ventable portion 51 of the laminate film 49 opens. Namely, the upper edge portion of the left-side structural portion and the upper edge portion of the right-side structural portion of the laminate film 49 separate. Therefore, high-temperature debris within the battery cell 48 is discharged via the first smoke vent holes 46 of the lid 45 and the second smoke vent holes 68 of the main body member 66 to above the heat-resistant insulating member 65. Therefore, there is little concern that the high-temperature debris will fill the interior of the module case 42 and exert intense heat on the other battery cells 48. Accordingly, if thermal runaway arises at the battery cell 48 of either one of the battery module 40 and the battery module 60, there is little concern that a thermal chain will arise between the plural battery cells 48 that are included in the battery module 40, 60 that has that battery cell 48. Therefore, there is little concern that the battery pack 20 will catch on fire when there is thermal runaway of the battery cell 48 of either one of the battery module 40 or the battery module 60. Note that the high-temperature debris includes, for example, internal electrodes, the electrolyte liquid, and gas (smoke) of the battery cell 48.

Further, when high-temperature debris of any of the battery cells 48 of the battery module 40 is discharged forcefully to the upper side of the heat-resistant insulating member 65, there are cases in which the debris sticks to the upper surface of the base portion 67 of the heat-resistant insulating member 65 of the battery module 60. However, because the base portion 67 is made of mica as described above, the base portion 67 has excellent heat resistance. Therefore, even if high-temperature debris sticks to the upper surface of the base portion 67, there is little concern that the base portion 67 will deform greatly or that the base portion 67 will break. Therefore, there is little concern that the intense heat that extends from the debris to the base portion 67 will reach the battery cells 48 provided within the module case 42 of the battery module 60. Namely, there is little concern that a thermal chain will arise between the plural battery cells 48 included within the battery module 60, due to debris that is discharged from the battery module 40. Moreover, even if debris contacts the base portion 67, it is difficult for the heat of the debris to be transferred from the base portion 67, which is made of mica that has a low thermal conductivity, to the fixing bracket 80. Accordingly, it is easy to maintain the fixed state of the fixing bracket 80 and the lower case 24 (the bottom plate portion 26).

Moreover, because the base portion 67 is electrically insulative, even if the aforementioned debris is charged, there is little concern that a short circuit will arise between the debris and the battery cells 48 of the battery module 60 via the base portion 67.

In the battery pack 20, the fixing member 85 is detachably fit in the insertion grooves 79 that are formed between the connecting plate-shaped portions 71 and the auxiliary members 75 of the heat-resistant insulating members 65 attached to the battery modules 40, 60. In other words, the fixing member 85 is supported by the connecting portions 74 of the two heat-resistant insulating members 65 that are attached to the battery modules 40, 60, respectively. As described above, the respective heat-resistant insulating members 65 that are attached to the battery modules 40, 60 are fixed to the lower case 24 via the bolts 89. Further, the respective heat-resistant insulating members 65 that are fixed to the lower case 24 in this way are mechanically joined to one another by the fixing member 85. Thus, the heat-resistant insulating members 65 can be simply and securely attached to the respective battery modules 40, 60. Accordingly, even if debris, which has been forcefully discharged out upward from one of the battery cells 48 of the battery module 40 for example, collides with the base portion 67, there is little concern that the main body member 66 will fall off of the module case 42 or that the auxiliary member 75 will fall off of the main body member 66.

Further, if the heat-resistant insulating members 65 (the main body members 66) are mounted to the battery modules 40, 60 by double-sided tapes, there is the concern that the adhesive forces of the double-sided tapes will disappear due to the heat within the battery case 22, and that, due thereto, the heat-resistant insulating members 65 will fall off of the battery modules 40, 60. In contrast, in the present embodiment, the fixing member 85 is mechanically joined to the insertion grooves 79 (the connecting plate-shaped portions 71, the auxiliary members 75) of the heat-resistant insulating members 65. Thus, even in a case in which the temperature of the interior of the battery case 22 becomes high, as compared with a case in which the heat-resistant insulating members 65 are mounted to the battery modules 40, 60 by using double-sided tapes, there is little concern that the heat-resistant insulating members 65 will fall off of the battery modules 40, 60.

In a case of using double-sided tapes, it must be made such that the regions where the double-sided tapes are adhered at the lids 45 and the base portions 67, and the first smoke vent holes 46 and the second smoke vent holes 68, do not overlap in the vertical direction. Namely, in the case of using double-sided tapes, the positions and the sizes of the first smoke vent holes 46 provided at the lids 45, and the positions and the sizes of the base portions 67 provided at the main body members 66, are limited by the double-sided tapes. In contrast, such problems do not arise in the present embodiment.

Moreover, the adhering of the double-sided tape to the lid 45 and the base portion 67 is carried out by manual work by a worker, but the work of attaching and removing the fixing member 85 into and from the insertion grooves 79 can be carried out automatically by using an attaching/removing device (not illustrated).

Moreover, in a case of using double-sided tape, the lid 45 and the main body member 66 must be manufactured such that the degrees of planarity of the upper surface of the lid 45 and the lower surface of the base portion 67 are high. Therefore, in this case, when mica is used as the material of the main body member 66, only a specific type of mica can be selected. For example, in this case, only flexible mica can be selected as the material of the main body member 66. In contrast, in a case of using the connecting plate-shaped portion 71, the auxiliary member 75 and the fixing member 85 as in the present embodiment, there is no need to make the degrees of planarity of the upper surface of the lid 45 and the lower surface of the base portion 67 high. Therefore, when mica is used as the material of the main body member 66, any of various types of mica can be selected.

Moreover, as is clear from Fig. 1 and Fig. 2, as seen in a plan view, the fixing member 85 closes off the gaps between the connecting plate-shaped portion 71 (the first nipping portion 73) and the auxiliary member 75 (the second nipping portion 78) at the battery module 40 side, and the connecting plate-shaped portion 71 (the first nipping portion 73) and the auxiliary member 75 (the second nipping portion 78) at the battery module 60 side. Therefore, high-temperature debris, which heads into these gaps from the battery module 40 or the battery module 60, slipping downward through the gaps and contacting at least one of the rear end portion of the battery module 40 and the front end portion of the battery module 60 can be suppressed by the fixing member 85. Moreover, even if high-temperature debris contacts the fixing member 85 that has a high thermal conductivity because it is made of metal, it is difficult for the heat of that fixing member 85 to be transmitted to the connecting plate-shaped portions 71 and the auxiliary members 75 that are made of mica that has a low thermal conductivity. Thus, even if high-temperature debris contacts the fixing member 85, there is little concern that the heat of the fixing member 85 will be transmitted to the battery cells 48 of at least one of the battery module 40 and the battery module 60.

Further, the fixing member 85 can be inserted into the respective insertion grooves 79, and the fixing member 85 can be removed from the insertion grooves 79, by moving the fixing member 85 in the left-right direction relatively to the insertion grooves 79 of the battery modules 40, 60. Therefore, in a case in which, for example, the left-right dimension of the fixing member 85 is smaller than left-right direction distance DS (see Fig. 2) between the left side surfaces of the auxiliary members 75 of the heat-resistant insulating members 65 attached to the battery modules 40, 60 and the inner surface of a left-side portion 27L of the peripheral wall portion 27 of the lower case 24, the fixing member 85 can be inserted into the insertion grooves 79 of the heat-resistant insulating members 65, and the fixing member 85 can be moved toward the left side from the insertion grooves 79, even in a state in which the battery module 40 and the battery module 60 are fixed to the bottom plate portion 26.

The connecting portions 74 that have the insertion grooves 79 are structured by the connecting plate-shaped portions 71 and the auxiliary members 75 that are elastically deformable in the vertical direction. Therefore, in the present embodiment, the connecting portions 74 that have the insertion grooves 79 are realized by a simple structure.

Further, the distance in the vertical direction between the lower surface of the first nipping portion 73 and the upper surface of the second nipping portion 78 at the time when the connecting plate-shaped portion 71 and the auxiliary member 75 are in free states is H1, and the plate thickness (vertical dimension) of the fixing member 85 that is a flat plate made of metal is H2 that is greater than H1. Therefore, when the fixing member 85 is inserted into the insertion grooves 79 that are formed between the first nipping portions 73 and the second nipping portions 78, the first nipping portions 73 and the second nipping portions 78 press-contact the upper and lower both surfaces of the fixing member 85 respectively, while elastically deforming in the vertical direction. Therefore, the connecting portions 74 and the fixing member 85 can be mechanically joined simply and reliably.

Moreover, the left and right flanges 69 of the main body members 66 of the heat-resistant insulating members 65 contact the upper portions of the left and right side surfaces of the corresponding module cases 42. Therefore, for example, even in a case in which the vehicle 10 vibrates or the like, and debris that the battery cell 48 has discharged forcefully collides with the main body member 66, there is little concern that the main body member 66 will move in the left-right direction relative to the corresponding module case 42.

The connecting plate-shaped portions 71 and the auxiliary members 75 are made of mica. Therefore, the connecting portions 74, which are heat-resistant and to which the fixing member 85 is connected, can be manufactured at a low cost.

The front portion and the rear portion of the fixing member 85 that is made of metal are covered from above and below by the connecting plate-shaped portions 71 and the auxiliary members 75 that are made of mica. Therefore, the temperature of the fixing member 85 becoming high due to the heat of high-temperature debris that has been discharged from the battery cell 48 can be suppressed by the connecting plate-shaped portions 71 and the auxiliary members 75.

Although a battery device relating to an embodiment has been described above, the design thereof can be changed appropriately within a scope that does not depart from the gist of the present disclosure.

For example, the main body members 66 and the auxiliary members 75 may be structured from materials different than mica. For example, at least one of the main body members 66 and the auxiliary members 75 may be structured by at least one of glass, silica that is a substance containing silicon as a constituent element, and alumina (aluminum oxide).

A portion of the fixing member 85 may be fixed to the battery module. For example, the fixing member 85 may be fixed to the case main body 43 of the module case 42 of the battery module 60. By doing so, the heat-resistant insulating members 65 can be attached more simply to the two, respective battery modules 40, 60 that are adjacent to one another.

The number of battery modules that are housed in the battery case 22 may be one or may be a plural number of three or more. Further, the direction in which plural battery modules are lined-up may be a direction different than the longitudinal direction.

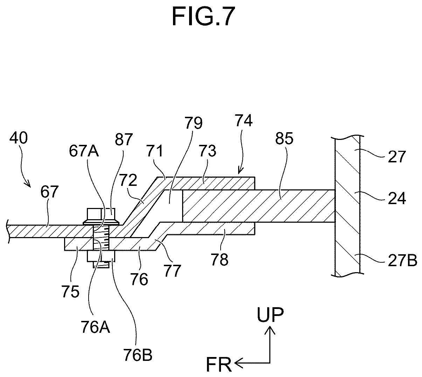

Further, as illustrated in Fig. 7, for example, the battery pack 20 may have only the one battery module 40, and the rear portion of the fixing member 85 may be fixed to a rear plate portion 27B of the peripheral wall portion 27 of the lower case (fixed body) 24, and the front portion of the fixing member 85 may be fit in the insertion groove 79 of the heat-resistant insulating member 65 that is attached to the battery module 40. Note that the battery pack 20 may have plural battery modules, and the fixing member 85 that is fixed to the inner surface of the peripheral wall portion 27 may be fit in the insertion groove 79 of the heat-resistant insulating member 65 that is attached to one of the battery modules facing the inner surface of the peripheral wall portion 27.

The number, positions and sizes of the first smoke vent holes 46 formed in the lid 45, and the number, positions and sizes of the second smoke vent holes 68 formed in the base portion 67, may be different than those described above.

The battery cell 48 may be a battery cell of a type that is different than a laminate type. It is preferable that the battery cell have a release value (safety valve) that opens when the internal pressure of the battery cell reaches a predetermined value.

The vehicle may be an electric vehicle other than a battery electric vehicle. For example, the vehicle may be a hybrid electric vehicle (HEV) or a plug-in hybrid electric vehicle (PHEV).

## Claims

1. A battery device comprising:
a battery module having a plurality of battery cells that are lined-up in a predetermined direction, and a module case that houses the plurality of battery cells;
a heat-resistant insulating member attached to the battery module so as to cover first smoke vent holes formed in the module case, and including a connecting portion having an insertion groove; and
a fixing member detachably fit in the insertion groove and supported by a fixed body.

2. The battery device of claim 1, wherein, given that a direction along a predetermined straight line is defined as a first direction,
an end portion at one side, in the first direction, of the insertion groove is open.

3. The battery device of claim 2, wherein, given that a direction orthogonal to the first direction is defined as a second direction,
both end portions, in the second direction, of the insertion groove are open.

4. The battery device of claim 3, wherein, given that a direction orthogonal to the first direction and the second direction is defined as a third direction, the connecting portion has:
a first plate-shaped portion, and
a second plate-shaped portion facing the first plate-shaped portion in the third direction so as to form the insertion groove between the first plate-shaped portion and the second plate-shaped portion.

5. The battery device of claim 4, wherein:
the first plate-shaped portion and the second plate-shaped portion are elastically deformable in the third direction, and
a dimension, in the third direction, of a gap between the first plate-shaped portion and the second plate-shaped portion when the first plate-shaped portion and the second plate-shaped portion are in free states is smaller than a dimension, in the third direction, of the fixing member.

6. The battery device of claim 3, wherein:
the heat-resistant insulating member has:
a base portion facing the first smoke vent holes from above, and
a pair of flanges apart from one another in the second direction that is orthogonal to a vertical direction and to the first direction;
an upper portion of the module case is positioned between the pair of flanges; and
the pair of flanges contact the upper portion of the module case.

7. The battery device of claim 6, wherein:
the connecting portion is provided at one end portion, in the first direction, of the base portion, and
a fixing bracket is fixed to another end portion, in the first direction, of the base portion and to a bottom plate portion of a battery case that houses the battery module, the heat-resistant insulating member and the fixing member.

8. The battery device of any one of claims 1 through 3, wherein the connecting portion is formed of mica.

9. The battery device of any one of claims 1 through 3, wherein second smoke vent holes that face the first smoke vent holes are formed in the heat-resistant insulating member.

10. The battery device of any one of claims 1 through 3, wherein the fixing member is formed of metal.

11. The battery device of any one of claims 1 through 3, comprising a plurality of battery modules,
wherein the connecting portion of the heat-resistant insulating member that is attached to at least one of the battery modules is the fixed body.

12. The battery device of any one of claims 1 through 3, wherein the fixing member is fixed to the battery module to which the heat-resistant insulating member having the connecting portion, which is the fixed body, is attached.

13. The battery device of any one of claims 1 through 3, wherein a battery case, which houses the battery module, the heat-resistant insulating member and the fixing member, is the fixed body.
